# FASCICULE DE BREVET EUROPEEN

(11) **EP 2 797 700 B1**
(45) Date de publication et mention de la délivrance du brevet: **09.03.2016**
(21) Numéro de dépôt: 12816774.9
(22) Date de dépôt: 21.12.2012
(51) Int. Cl.: B09B 1/00, C01C 3/02

(54) **DISPOSITIF DE COUVERTURE DE BASSIN DE STOCKAGE DE LIQUIDES POLLUES OU POLLUANT**
ABDECKUNGSVORRICHTUNG FÜR EINEN SPEICHERBEHÄLTER FÜR DIE AUFBEWAHRUNG VON VERUNREINIGTEN ODER VERUNREINIGENDEN FLÜSSIGKEITEN
COVER DEVICE FOR A STORAGE TANK USED TO STORE POLLUTED OR POLLUTING LIQUIDS

(30) Priorité: 28.12.2011 FR 1104122
(43) Date de publication de la demande: 05.11.2014
(73) Titulaire: Scylla, 39100 Dole (FR)
(72) Inventeur: CHERONT, Arnaud, F-21200 Beaune Hameau De Challanges (FR)
(74) Mandataire: Oudin, Stéphane
(86) Numéro de dépôt international: PCT/FR2012/053056
(87) Numéro de publication internationale: WO 2013/098517

(56) Documents cités:
- EP-A1- 1 658 762
- WO-A1-94/03582
- JP-A- 2001 162 242
- US-A1- 2002 008 057

## Description

### Domaine technique

La présente invention concerne les dispositifs de couverture de bassins de stockage à ciel ouvert de liquides pollués ou polluant issus très souvent de l'industrie, ces liquides sont classiquement appelés lixiviats.

### Technique antérieure

De nos jours, de grands volumes de lixiviats sont stockés dans des bassins de stockage en attendant leur prise en charge par des centres de traitements des effluents. Environ 90 % de ces bassins de stockage sont à ciel ouvert. Ce type de bassins a plusieurs inconvénients. Tout d'abord, lorsqu'il pleut, les eaux pluviales se mélangent aux lixiviats et augmentent par conséquent le volume à prendre en charge par lesdits centres de traitements, accroissant ainsi le coût de traitement par rapport au volume initial de lixiviats. Cet inconvénient est évidemment plus ou moins important selon la zone géographique d'installation desdits bassins et la quantité annuelle de précipitation de la zone concernée.

Pour résoudre en partie ces inconvénients, il est connu de couvrir ces bassins de stockage de lixiviats. Ainsi, on connaît déjà des couvertures flottantes, des couvertures traditionnelles ou encore des couvertures du type chapiteau. Ces couvertures flottantes ou du type chapiteau permettent d'éviter aux eaux pluviales de venir accroitre le volume des effluents mais annihilent toute forme d'évaporation naturelle ou augmentée artificiellement à l'aide d'évaporateurs ou brasseurs. De plus les matériaux utilisés pour ces ouvrages avaient une faible résistance aux ultraviolets, aux agents chimique et aux intempéries (vent, neiges ...). La demande de brevet japonais JP 2001/162242 divulgue une structure de site non polluant d'enfouissement des déchets comportant deux bâches étanches à l'eau installées sur toute la surface d'un bassin, une base installée tout autour de l'extrémité supérieure du bassin, la partie périphérique de la première bâche tendue à plat étant reliée à ladite base, la deuxième bâche tendue à plat ou convexe étant placée en maintenant un interstice au-dessus de ladite première bâche, la partie périphérique de la deuxième bâche étant reliée à une partie supérieure de ladite base. La première bâche repose sur des premiers câbles entrecroisés et la deuxième bâche est insérée entre des deuxièmes câbles entrecroisés afin d'éviter qu'elle ne se soulève sous l'effet du vent. Cette structure est particulièrement complexe et onéreuse à mettre en oeuvre. En outre, elle ne permet pas une bonne maîtrise de l'évaporation naturelle.

Concernant les couvertures traditionnelles rigides, elles ne peuvent être réalisables que sur des bassins de petites tailles. L'intérêt majeur de ces couvertures connues est de traiter uniquement les liquides pollués ou polluant et non la pluie se mélangeant avec eux. Toutefois, ces couvertures connues présentent l'inconvénient d'empêcher et/ou d'augmenter l'évaporation naturelle des effluents stockés par l'accroissement de la température à l'intérieur des bassins de stockage sous les couvertures. Enfin, ces différentes couvertures connues sont lourdes, difficiles à mettre en oeuvre, onéreuses, et pour certaines limitées à des bassins de petites dimensions et de formes simples.

### Exposé de l'invention

Ainsi, c'est l'objet de la présente invention que de proposer un dispositif de couverture de bassins de stockage de lixiviats léger, facile à mettre en oeuvre et permettant de couvrir les bassins existant quelles que soient leurs configurations (carré, rectangulaire ou patatoïde) ou leurs dimensions, tout en assurant une bonne maîtrise de l'évaporation naturelle.

La présente invention a ainsi pour objet un dispositif de couverture d'un bassin de stockage à ciel ouvert de lixiviats comportant au moins deux longrines destinées à être disposées chacune de part et d'autre dudit bassin de stockage, un réseau d'au moins deux élingues parallèles entre elles et tendues entre les deux longrines et au moins une membrane fixée sur ledit réseau d'élingues recouvrant entièrement ledit bassin de stockage, lesdites longrines étant disposées de manière à créer une pente unique au niveau du réseau d'élingues et de la membrane, ledit dispositif de couverture étant remarquable en ce que la membrane est composée d'une pluralité de lés disposés parallèlement et perpendiculairement à l'axe longitudinal des élingues avec un recouvrement et maintenus ponctuellement entre eux.

De manière avantageuse, la membrane comporte une pluralité d'orifices et des extracteurs d'air fixés sur sa face supérieure au droit de chacun desdits orifices. La membrane est de préférence une géomembrane.

Selon un mode de réalisation préféré, le dispositif de couverture comporte entre le réseau d'élingues et la membrane, une sous-couche de drainage pour canaliser les ruissellements sous-jacents composée d'une pluralité de lés disposés parallèlement et perpendiculairement à l'axe longitudinal des élingues avec un recouvrement et maintenus ponctuellement entre eux.

Ladite sous-couche est de préférence une géogrille.

De manière avantageuse chaque longrine comprend une pluralité d'éléments disposés les uns à la suite des autres et comportant chacun une aile et une âme s'étendant perpendiculairement du milieu de ladite aile de sorte à avoir une section en forme générale de T inversé, chacun desdits éléments étant réalisé à partir de granulats broyés agglomérés par un liant tel que, par exemple, du béton.

Chaque longrine comprend de préférence un organe d'accrochage.

Avantageusement, chaque élingue est un câble muni à chacune de leur extrémité d'une boucle cossée manchonnée apte à coopérer avec les organes d'accrochage.

### Description sommaire des figures

D'autres avantages et caractéristiques ressortiront mieux de la description qui va suivre d'une variante d'exécution d'un dispositif de couverture de bassins de stockage de lixiviats selon l'invention en référence aux figures annexées sur lesquelles :
- la figure 1 est une vue de perspective d'un dispositif de couverture de bassins de stockage de lixiviats selon l'invention ;
- la figure 2 est une vue de dessus du dispositif de la figure 1 ;
- la figure 3 est une vue en coupe verticale du dispositif de la figure 2 selon l'axe III-III' ;
- la figure 4 est une vue de perspective détaillée et agrandie de dessus du dispositif de la figure 1.

### Meilleure manière de réaliser l'invention technique

On décrira, dans ce mode d'exécution non limitatif, un dispositif de couverture d'un bassin de stockage de lixiviats dont la face supérieure est de forme rectangulaire. Toutefois, la face supérieure dudit bassin de stockage pourra évidemment être de toute autre forme telle que, par exemple, la forme carrée, circulaire ou encore elliptique sans sortir du cadre de la présente invention.

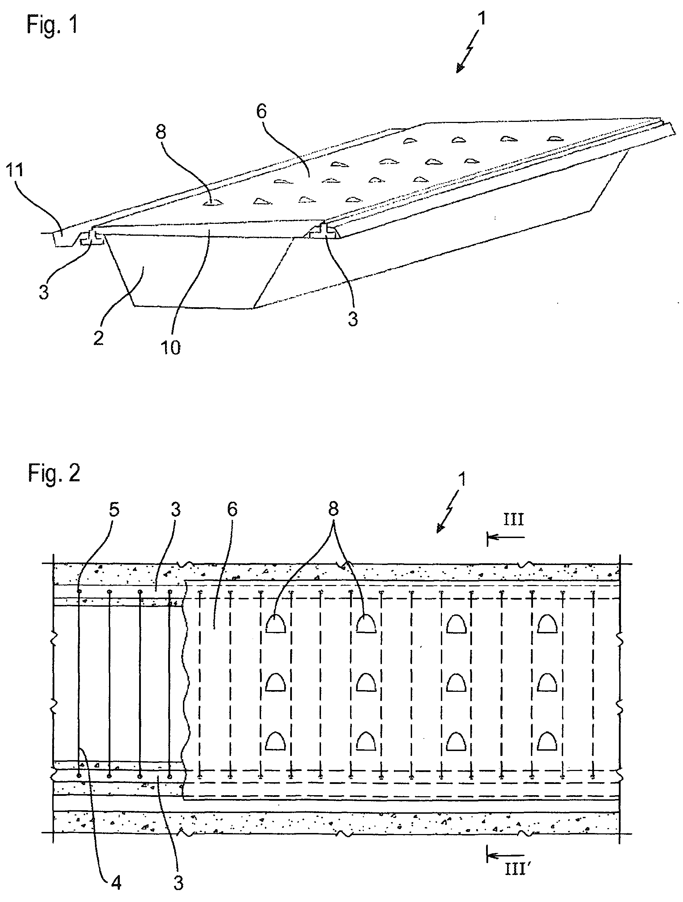

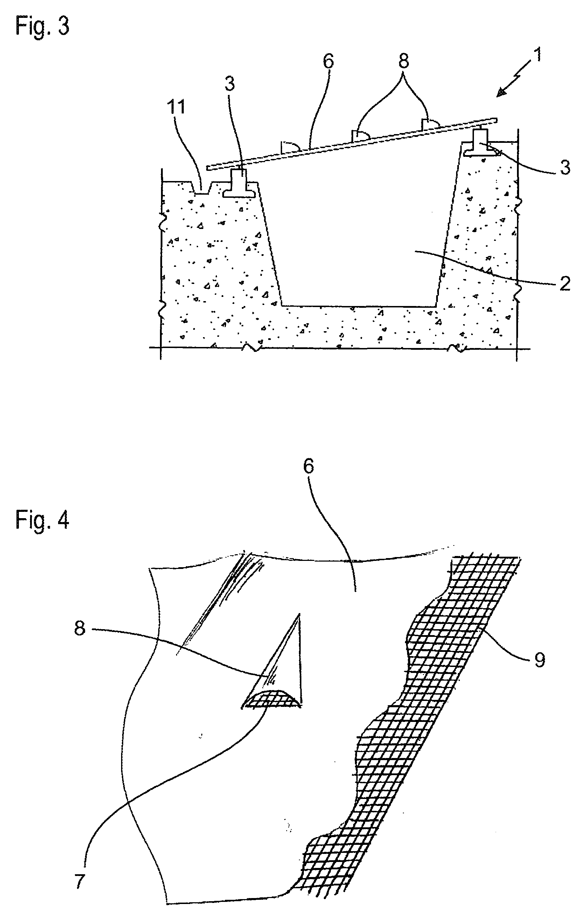

Ainsi, en référence aux figures 1 à 4, le dispositif de couverture 1 d'un bassin de stockage 2 de lixiviats comporte deux longrines 3 disposées chacune de part et d'autre dudit bassin de stockage 2 le long respectivement de deux de ses bords opposés, avantageusement les bords longitudinaux. Dans le cas d'un bassin de stockage 2 dont la face supérieure est de forme circulaire ou elliptique, on comprend bien que les bords longitudinaux correspondront alors au demi-cercle ou à la demi-ellipse. Chaque longrine 3 est apte à recevoir l'un des extrémités d'au moins deux élingues 4 tendues entre les deux longrines 3. Les extrémités de chaque élingue 4 sont fixées sur les longrines 3 grâce à des organes d'accrochage 5, avantageusement des anneaux scellés dans lesdites longrines 3. De préférence, entre les deux longrines 3 est disposé un réseau d'une pluralité d'élingues 4 parallèles entre elles. Sur ce réseau d'élingues 4 est fixée au moins une membrane 6 composée d'une pluralité de lés (non représentés) et recouvrant entièrement le bassin de stockage 2 d'une extrémité longitudinale à l'autre.

Chaque longrine 3 comprend une pluralité d'éléments 31 disposés les uns à la suite des autres et avantageusement réalisés à partir de granulats broyés agglomérés par un liant tel que, par exemple, du béton. Par ailleurs, chaque élément 31 de chaque longrine 3 comprend une aile 32 et une âme 33 s'étendant perpendiculairement du milieu de ladite aile 32 de sorte à avoir une section en forme générale de T inversé, cette forme spécifique permettant une meilleure stabilité des longrines 3. Les deux longrines 3 sont disposées de manière à créer une pente au niveau du réseau d'élingues 4 et donc des lés de membrane 6. Si la topographie du site, dans lequel est creusé le bassin de stockage 2 de lixiviats, présente une pente naturelle il suffit de poser à même le sol les longrines 3 de part et d'autre dudit bassin de stockage 2 puis de les lester par des matériaux à forte densité (argile, granulats, bétons ...). En revanche, si le site d'implantation est plat ou pratiquement plat, il convient de créer artificiellement une pente. Pour cela, d'une part, on pose la longrine 3, située en amont par rapport à la pente, à même le sol puis on la leste par des matériaux à forte densité et, d'autre part, on enterre la longrine 3 située en aval de manière à ne laisser apparaître que les organes d'accrochage 5 des élingues 4 scellés à l'extrémité libre de l'âme 33 de ses éléments 31.

Une fois, les longrines 3 mises en place, le réseau d'élingues 4 est tendu entre lesdites longrines 3. On comprend bien que l'Homme du Métier n'aura aucune difficulté pour déterminer la matière et les dimensions de chaque élingue 4, le nombre d'élingues 4 ainsi que l'espacement entre chaque élingue 4 en fonction notamment de l'écartement entre les longrines 3 et les dimensions du bassin de stockage 2. En outre, les élingues 4 seront de préférence des câbles en acier inoxydable munis à chacune de leur extrémité d'une boucle cossée manchonnée apte à coopérer avec les organes d'accrochage 5 pour maintenir tendues lesdites élingues 4 entre les deux longrines 3.

Sur ce réseau d'élingues 4 est posé une membrane 6 composée d'une pluralité de lés disposés parallèlement et perpendiculairement à l'axe longitudinal des élingues 4 avec un recouvrement à la manière des tuiles d'une toiture classique d'une habitation individuelle et maintenus ponctuellement entre eux le long de leurs bords longitudinaux au droit de la zone de recouvrement, par exemple, par soudage. Ce maintien ponctuel permet de laisser libre une partie des bords longitudinaux et de créer un passage permettant à l'air de circuler en cas de dépression ou surpression sous la membrane 6 due à l'effet du vent sur le dispositif de couverture 1 selon l'invention. La membrane 6 est avantageusement une géomembrane, c'est-à-dire une feuille de géosynthétique de grandes dimensions dont au moins l'un des composants est à base de polymère synthétique ou naturel tels que, par exemple, du polyéthylène haute densité (PEHD) et/ou du polypropylène souple (PP-F), et assurant principalement une fonction d'étanchéité en contact avec le sol ou avec d'autres matériaux dans les domaines de la géotechnique et du génie civil.

En outre, la membrane 6 comporte des orifices 7 et des extracteurs d'air 8 fixés sur sa face supérieure au droit de chacun desdits orifices 7 permettant de mettre en contact la zone située sous ladite membrane 6 avec l'extérieur afin de favoriser l'évaporation des lixiviats contenu dans le bassin de stockage 2 tout en empêchant les eaux de pluie ruisselant sur le dessus de la membrane 6 de tomber dans le bassin de stockage 2.

De manière avantageuse, entre les élingues 4 et la membrane 6, une sous-couche 9 est mise en place avant la membrane 6. Comme la membrane 6, cette sous-couche 9 est également composée d'une pluralité de lés, non représentés, disposés parallèlement et perpendiculairement à l'axe longitudinal des élingues 4 avec un recouvrement à la manière des tuiles d'une toiture classique d'une habitation individuelle et maintenus ponctuellement entre eux le long de leurs bords longitudinaux au droit de la zone de recouvrement, par exemple, par soudage. De même, la sous-couche 9 est avantageusement une géogrille, c'est-à-dire une structure plane à base de polymère synthétique ou naturel tels que, par exemple, du polyéthylène haute densité (PEHD), et constituée par un réseau ouvert et régulier d'éléments résistants à la traction et pouvant être assemblés par extrusion, par collage, par accrochage à l'aide de colliers plastique à serrage permanent ou encore par entrelacement, de manière à former une grille. Cette géogrille est utilisée pour le renforcement de la structure du dispositif de couverture 1 du bassin de stockage 2 de lixiviats selon l'invention. Toutefois, cette sous-couche 9 permet également, en association avec les extracteurs d'air 7, de drainer pour canaliser les ruissellements sous-jacents.

En référence avec la figure 1, compte tenu de la configuration à une pente unique du dispositif de couverture 1, les cotés de ce dernier présentent une ouverture 10 de forme triangulaire permettant la circulation de l'air pour maîtriser l'évaporation, mais également des opérations de maintenance et de surveillance des niveaux du bassin de stockage. En effet, ces ouvertures 10 permettent, d'une part, une vision directe sur le bassin de stockage 2 et sur des équipements tels que les brasseurs et, d'autre part, une prise de prélèvements pour effectuer des analyses des lixiviats, sans avoir à intervenir sur le dispositif de couverture 1 ni arrêter les différents équipements dudit bassin de stockage 2.

Enfin, du coté de la longrine 3 située en aval par rapport à la pente de la membrane 6, on peut prévoir un caniveau 11 permettant de collecter et d'évacuer les eaux pluviales ruisselant sur ladite membrane 6.

Ce dispositif de couverture 1 selon l'invention est particulièrement intéressant parce qu'il ne nécessite aucun entretien particulier, qu'il est dimensionné de manière à résister aux conditions du site d'implantation du bassin de stockage 2 (UV, pluie, neige et vent)

### Description d'autres modes de réalisation

Selon un second mode de réalisation non représenté, le dispositif de couverture 1 comporte des longrines supplémentaires disposées de part et d'autre du bassin de stockage 2 perpendiculairement aux longrines 3 précédemment décrites. Chacune de ces longrines supplémentaires est inclinée pour respecter la pente dudit dispositif de couverture 1 et est apte à recevoir l'une des extrémités d'une pluralité d'élingues supplémentaires tendues entre ces deux longrines supplémentaires perpendiculairement aux élingues 4 précédemment décrites. Ainsi, entre les deux longrines 3 et les deux longrines supplémentaires est disposé un quadrillage d'élingues formé par les élingues 4 et les élingues supplémentaires. Cette configuration permet de renforcer la structure du dispositif de couverture 1 notamment pour des bassins de stockage de très grandes dimensions. Toutefois, ce mode de réalisation ne permet plus d'avoir de grandes ouvertures sur le coté du dispositif de couverture 1 car elles sont occultées par les longrines supplémentaires.

### Possibilité d'application industrielle

Comme décrit précédemment, le dispositif de couverture 1 selon l'invention est principalement destiné à être utilisé pour couvrir un bassin de stockage 2 de lixiviats, mais il peut également être installé sur un bassin de rétention des eaux pluviales par exemple.

Enfin, il est clair que la présente invention ne se limite pas à la seule forme d'exécution de ce dispositif de couverture 1 ; elle en embrasse, au contraire, toutes les variantes de réalisation et d'application respectant le même principe.

## Revendications

1. Dispositif de couverture (1) d'un bassin de stockage (2) à ciel ouvert de lixiviats comportant au moins deux longrines (3) destinées à être disposées chacune de part et d'autre dudit bassin de stockage (2), un réseau d'au moins deux élingues (4) parallèles entre elles et tendues entre les deux longrines (3) et au moins une membrane (6) fixée sur ledit réseau d'élingues (4) recouvrant entièrement ledit bassin de stockage (2), lesdites longrines (3) étant disposées de manière à créer une pente unique au niveau du réseau d'élingues (4) et de la membrane (6), ledit dispositif de couverture (1) étant **caractérisé en ce que** la membrane (6) est composée d'une pluralité de lés disposés parallèlement et perpendiculairement à l'axe longitudinal des élingues (4) avec un recouvrement et maintenus ponctuellement entre eux.

2. Dispositif de couverture (1) selon la revendication 1 **caractérisé en ce que** la membrane (6) comporte une pluralité d'orifices (7) et des extracteurs d'air (8) fixés sur sa face supérieure au droit de chacun desdits orifices (7).

3. Dispositif de couverture (1) selon l'une quelconque des revendications 1 ou 2 **caractérisé en ce que** la membrane (6) est une géomembrane.

4. Dispositif de couverture (1) selon l'une quelconque des revendications 1 à 3 **caractérisé en ce qu'**il comporte entre le réseau d'élingues (4) et la membrane (6), une sous-couche (9) de drainage pour canaliser les ruissellements sous-jacents composée d'une pluralité de lés disposés parallèlement et perpendiculairement à l'axe longitudinal des élingues (4) avec un recouvrement et maintenus ponctuellement entres eux.

5. Dispositif de couverture (1) selon la revendication 4 **caractérisé en ce que** la sous-couche (9) est une géogrille.

6. Dispositif de couverture (1) selon l'une quelconque des revendications 1 à 5 **caractérisé en ce que** chaque longrine (3) comprend une pluralité d'éléments (31) disposés les uns à la suite des autres et comportant chacun une aile (32) et une âme (33) s'étendant perpendiculairement du milieu de ladite aile (32) de sorte à avoir une section en forme générale de T inversé.

7. Dispositif de couverture (1) selon la revendication 6 **caractérisé en ce que** chaque élément (31) est réalisé à partir de granulats broyés agglomérés par un liant tel que, par exemple, du béton.

8. Dispositif de couverture (1) selon l'une quelconque des revendications 1 à 7 **caractérisé en ce que** chaque longrine (3) comprend un organe d'accrochage (5).

9. Dispositif de couverture (1) selon la revendication 8 **caractérisé en ce que** chaque élingue (4) est un câble munis à chacune de leur extrémité d'une boucle cossée manchonnée apte à coopérer avec les organes d'accrochage (5).

## Patentansprüche

1. Abdeckungsvorrichtung (1) für ein offenes Sickerwasserspeicherbecken (2), die mindestens zwei Langschwellen (3), die dazu vorgesehen sind, jeweils beiderseits des besagten Speicherbeckens (2) angeordnet zu werden, ein Netzwerk aus mindestens zwei Seilgeschirren (4), die zueinander parallel sind und zwischen den zwei Langschwellen (3) gespannt sind, und mindestens eine Membran (6) umfasst, die auf dem besagten Seilgeschirrnetzwerk (4) angebracht ist und das besagte Speicherbecken (2) vollständig bedeckt, wobei die besagten Langschwellen (3) derart angeordnet sind, dass ein einziges Gefälle auf der Höhe des Seilgeschirrnetzwerks (4) und der Membran (6) erzeugt wird, wobei die Abdeckungsvorrichtung (1) **dadurch gekennzeichnet ist, dass** die Membran (6) sich aus mehreren Bahnen zusammensetzt, die parallel und senkrecht zu der Längsachse der Seilgeschirre (4) mit einer Überlappung angeordnet sind und punktuell zwischen diesen gehalten werden.

2. Abdeckungsvorrichtung (1) nach Anspruch 1, **dadurch gekennzeichnet, dass** die Membran (6) mehrere Öffnungen (7) und Luftabzüge (8), die auf ihrer oberen Fläche rechts jeder der besagten Öffnungen (7) angebracht sind, umfasst.

3. Abdeckungsvorrichtung (1) nach einem der Ansprüche 1 oder 2, **dadurch gekennzeichnet, dass** die Membran (6) eine Geomembran ist.

4. Abdeckungsvorrichtung (1) nach einem der Ansprüche 1 bis 3, **dadurch gekennzeichnet, dass** sie zwischen dem Seilgeschirrnetz (4) und der Membran (6) eine Drainagezwischenschicht (9) zum Kanalisieren von darunterliegendem Ablaufwasser umfasst, die sich aus mehreren Bahnen zusammensetzt, die parallel und senkrecht zu der Längsachse der Seilgeschirre (4) mit einer Überlappung angeordnet sind und punktuell zwischen diesen gehalten werden.

5. Abdeckungsvorrichtung (1) nach Anspruch 4, **dadurch gekennzeichnet, dass** die Zwischenschicht (9) ein Geogitter ist.

6. Abdeckungsvorrichtung (1) nach einem der Ansprüche 1 bis 5, **dadurch gekennzeichnet, dass** jede Langschwelle (3) mehrere Elemente (31) aufweist, die aufeinanderfolgend angeordnet sind und jeweils einen Flügel (32) und einen Steg (33), der sich senkrecht zur Mitte des besagten Flügels (32) erstreckt, so dass sie einen Abschnitt in der allgemeinen Form eines umgedrehten T aufweisen, umfassen.

7. Abdeckungsvorrichtung (1) nach Anspruch 6, **dadurch gekennzeichnet, dass** jedes Element (31) aus zerkleinerten Granalien, die durch ein Bindemittel, wie beispielsweise Beton, agglomeriert wurden, hergestellt ist.

8. Abdeckungsvorrichtung (1) nach einem der Ansprüche 1 bis 7, **dadurch gekennzeichnet, dass** jede Langschwelle (3) eine Einhängeeinrichtung (5) aufweist.

9. Abdeckungsvorrichtung (1) nach Anspruch 8, **dadurch gekennzeichnet, dass** jedes Seilgeschirr (4) ein Kabel ist, das an jedem seiner Enden mit einer Kauschenschlaufe mit Muffe ausgestattet ist, die dazu geeignet ist, mit den Einhängeeinrichtungen (5) zusammenzuarbeiten.

## Claims

1. Device (1) for covering an open-air leachate storage tank (2) comprising at least two beams (3) intended to be arranged each on either side of said storage tank (2), a network of at least two slings (4) parallel to one another and stretched between the two beams (3) and at least one membrane (6) attached on said network of slings (4) entirely covering said storage tank (2), said beams (3) being arranged so as to create a single slope at the level of the sling network (4) and the membrane (6), said cover device (1) being **characterized in that** the membrane (6) is comprised of a plurality of strips arranged parallel and perpendicular to the longitudinal axis of the slings (4) with an overlap and held to one another at individual points.

2. Cover device (1) according to claim 1 **characterized in that** the membrane (6) has a plurality of openings (7) and air extractors (8) attached on its upper face in line with each of said openings (7).

3. Cover device (1) according to any one of claims 1 to 2, **characterized in that** the membrane (6) is a geomembrane.

4. Cover device (1) according to any one of claims 1 to 3, **characterized in that** it comprises, between the network of slings (4) and the membrane (6), a drainage sub-layer (9) for channeling the underlying runoff comprised of a plurality of strips arranged parallel and perpendicular to the longitudinal axis of the slings (4) with an overlap and held to one another at individual points.

5. Cover device (1) according to claim 4, **characterized in that** the sub-layer (9) is a geogrid.

6. Cover device (1) according to any one of claims 1 to 5, **characterized in that** each beam (3) includes a plurality of elements (31) arranged one after another and each comprising a flange (32) and a core (33) extending perpendicularly from the middle of said flange (32) so as to have a general inverted T cross-section.

7. Cover device (1) according to claim 6, **characterized in that** each element (31) is made of ground aggregate agglomerated by a binder such as, for example, concrete.

8. Cover device (1) according to any one of claims 1 to 7, **characterized in that** each beam (3) includes a fastening member (5).

9. Cover device (1) according to claim 8, **characterized in that** each sling (4) is a cable equipped at each end with a sleeved thimble loop capable of cooperating with the fastening members (5).
